# EUROPÄISCHE PATENTSCHRIFT

(11) **EP 0 569 754 B1**
(45) Veröffentlichungstag und Bekanntmachung des Hinweises auf die Patenterteilung: **20.05.1998**
(21) Anmeldenummer: 93106620.3
(22) Anmeldetag: 23.04.1993
(51) Int. Cl.: G01N 15/08, G01M 3/20

(54) **Verfahren und Vorrichtung zum Feststellen der Filtrationswirkung von Filtern bei der Sterilluftaufbereitung**
Method and apparatus to determine the effectiveness of filters during sterile air processing
Méthode et appareil pour déterminer l'efficacité des filtres pour la production d'air stérile

(30) Priorität: 13.05.1992 DE 4215783
(43) Veröffentlichungstag der Anmeldung: 18.11.1993
(73) Patentinhaber: GASTI Verpackungsmaschinen GmbH, D-74523 Schwäbisch Hall (DE)
(72) Erfinder: Weber, Willibald, W-7171 Michelfeld (DE)
(74) Vertreter: Pfeiffer, Helmut, Dipl.-Ing.

(56) Entgegenhaltungen:
- EP-A- 0 046 740
- DE-A- 4 012 054
- US-A- 4 369 898
- US-A- 4 515 007
- US-A- 5 076 965

## Beschreibung

Die Erfindung bezieht sich auf eine Anordnung nach dem Oberbegriff des Anspruchs 1.

Zur Bestimmung der effektiven Filtrationswirkung von Filtem bzw. zum Nachweis der Leckfreiheit solcher Filter werden in der Praxis verschiedene Testverfahren angewandt. So ist es bekannt, bestimmte Testmikroorganismen mittels eines Luftstromes durch den Filter zu leiten und dann die gefilterte Luft auf ihre Sterilität zu überprüfen. Dieses Verfahren ist aufwendig und benötigt einen vergleichsweise langen Untersuchungszeitraum.

Weitere Verfahren sind unter den Bezeichnungen Unterdruckhaltetest, Blasendruckmethode und Forward-Flow-Test bekanntgeworden. Allen Verfahren ist gemeinsam, daß undichte Stellen im Filter nicht direkt über die Filtrationswirkung erkannt werden. Darüber hinaus ist der Forward-Flow-Test, der auch im Inline-Verfahren ausgeführt werden kann, nur bei Membranfiltem anwendbar, also bei Filtern, die eine definitive Porengröße aufweisen. Die Benetzung und das Auswerten des Druckverhaltens sind recht aufwendig und teuer und das Verfahren ist anfällig, insbesondere beim Inline-Betrieb, da unter anderem die Luftanlage auf das Testsystem abgestimmt werden muß.

Schließlich ist ein Testverfahren bekanntgeworden, bei dem Mikronebel (Rauch) mittels Druckluft durch den zu überprüfenden Filter gedrückt wird, so daß undichte Stellen sofort nach Austritt aus dem dann als schlecht erkannten Filter sichtbar werden. Hierbei handelt es sich zwar um einen relativ einfachen Test, jedoch ist dazu der Ausbau des Filters notwendig.

Das gleiche gilt auch für Prüfanlagen, bei denen das Prüfaerosol außer aus paraffinem Ölnebel aus natürlichem atmosphärischem Aerosol besteht, das durch radioaktiven Stoff indiziert wird. Bei diesem Verfahren sind bisher nur Laborlösungen bekanntgeworden. Der Aufwand ist recht hoch und es ist auch hier der Ausbau des Filters notwendig.

Aus der US-Patentschrift 4,515,007 sind ein Verfahren und eine Vorrichtung bekanntgeworden, bei dem bzw. der zum Feststellen des Wirkungsgrades einer aus mehreren Einzelfiltem bestehenden und speziell im Nuklearbereich eingesetzten Filteranordnung über jeweils eine in den Zwischenbereich zwischen zwei Einzelfilter eingeführte Zuführleitung ein Aerosol eingebracht werden kann. Zur möglichst gleichmäßigen Verteilung des Aerosols über die Filterfläche ist im Bereich der Mündung jeder Zuführleitung ein Diffusor vorgesehen, zu dem achsparallel die Mündung einer Partikelmeßleitung angeordnet ist. Die aktiven Elemente der Filtertestvorrichtung, nämlich ein Aerosolerzeuger und ein Partikelmeßgerät sind über Steckverbindungen an das Sterilluftsystem angekoppelt, während die übrigen Elemente der Filtertestvorrichtung fest in das Sterilluftsystem integriert sind.

Der Erfindung liegt die Aufgabe zugrunde, eine Anordnung eines Filtertestsystems vorzuschlagen, durch das schnell, einfach und äußerst bequem zu jedem beliebigen Zeitpunkt eine sichere Filterprüfung an einer Maschine durchgeführt bzw. der Nachweis der Leckfreiheit des Filters erbracht werden kann. Ferner soll ein Verfahren vorgeschlagen werden, das mit einfachen Mitteln eine bequeme und sichere Filterüberprüfung in einer Maschine ermöglicht.

Diese Aufgabe wird in vorrichtungsmäßiger Hinsicht durch eine Anordnung gemäß dem kennzeichnenden Teil des Anspruchs 1 gelöst.

Mit den Mitteln nach der Erfindung wird ein Maschinen-lnlinetest ermöglicht, durch den die Filtrationswirkung des Filters leicht überprüft werden kann. Die Überprüfung kann bei Bedarf zu jedem beliebigen Zeitpunkt durchgeführt werden. Sie ist aufgrund der Vereinigung des Aerosolerzeuges und des Partikelmeßgerätes in einem tragbaren Komplettgerät schnell und einfach und bequem durchzuführen, wodurch sich auch eine erhöhte Produktionssicherheit ergibt. Der komplette Filtertest wird somit weitgehend automatisiert und optimal an den Betriebszyklus der Füll- und Verschließmaschine angepaßt, wobei eine solche Testanordnung in vorteilhafter Weise auch für mehrere Anlagen benutzt werden kann.

Die Anschlußarmaturen sind vorteilhaft als Steckverbindung und in Sterilausführung ausgebildet.

In einem Ausführungsbeispiel ist der Aerosolerzeuger mit einer auf der Reinseite des Filters liegenden Zuströmleitung verbindbar und das Partikelmeßgerät mit einer auf der Unreinseite des Filters liegenden Abströmleitung verbindbar.

Zum Anschluß an die Füll- und Verschließmaschine wird das Komplettgerät über die auf der Seite des Aerosolerzeuges liegende Anschlußarmatur mit der auf der Reinseite des Filters liegenden Strömungsleitung des Sterilluftsystems und über die auf der Seite des Partikelmeßgerätes liegende Anschlußarmatur mit der auf der Unreinseite des Filters liegenden Strömungsleitung des Sterilluftsystem verbunden.

Als Aerosolerzeuger eignet sich z. B. ein Paraffinnebelerzeuger, während zweckmäßigerweise das Partikelmeßgerät als optisches Partikelzählgerät und für verschiedene Partikelgrößen einstellbar ausgebildet ist.

In verfahrensmäßiger Hinsicht wird die der Erfindung zugrundliegende Aufgabe dadurch gelöst, daß das Komplettgerät derart an das Sterilluftsystem der Füll- und Verschließmaschine angeschlossen wird, daß nach Abschalten der Sterilluft die Reinseite des Filters mit Druckluftunterstützung mit einem Prüfaerosol beaufschlagt und anschließend hinter der Unreinseite des Filters eine Partikelmessung vorgenommen werden kann.

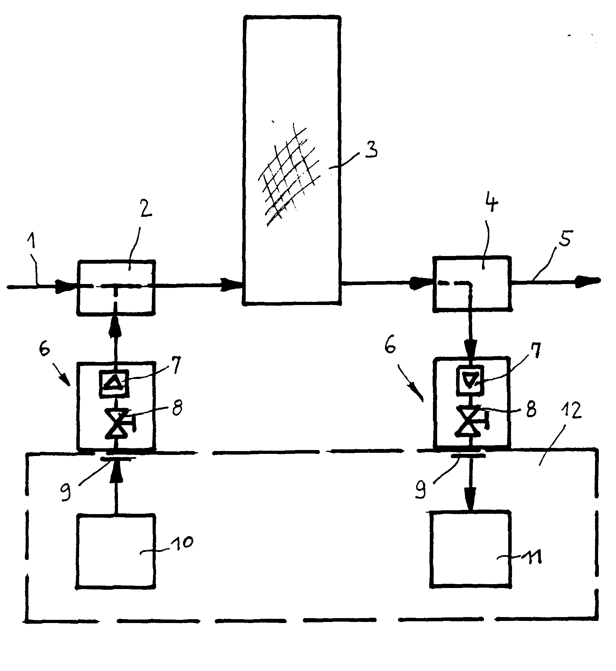

In der Zeichnung ist in schematischer Darstellung ein zum Durchführen einer ersten Verfahrensweise geeignetes Ausführungsbeispiel der Erfindung dargestellt. In einer Unreinluft in Normal- oder Niederdruck führenden Zuströmleitung 1 einer im einzelnen nicht dargestellten Füll- und Verschließmaschine sitzt ein Anschlußverteilerelement 2. Strömungsmäßig dahinter ist ein Filter 3 angeordnet, der in bekannter Weise als Tiefenfilter oder Membranfilter ausgebildet ist. Auf der Reinseite des Filters 3 ist in einer Reinluft führenden Abströmleitung 5 ein weiteres Anschlußverteilerelement 4 angeordnet.

Das Anschlußverteilerelement 2 ist Teil eines Aerosoleinspeissystems und weist zu diesem Zweck eine im einzelnen nicht dargestellte, selbstansaugende Venturidüse auf. Das Anschlußverteilerelement 4 ist Teil eines Probeentnahmesystems und weist zu diesem Zweck ein Staurohr mit einem entsprechend der Luftgeschwindigkeit und dem Probevolumen definierten Einlaßquerschnitt auf.

Die beiden Anschlußverteilerelemente 2, 4 stehen jeweils über Regelungsarmaturen 6, die je einen Durchflußmesser 7 sowie ein Regulier-/Absperrventil 8 aufweisen, mit Anschlußarmaturen 9 in Verbindung. Die vorzugsweise als Steckverbindungen ausgebildeten Anschlußarmaturen 9 stellen eine Verbindung mit einem tragbaren Komplettgerät 12 her, in dem im Bereich des Aerosoleinspeissystems ein Aerosolerzeuger 10 in Form eines handelsüblichen Paraffinnebelerzeugers untergebracht ist, während im Bereich des Probeentnahmesystems ein handelsübliches Partikelmeßgerät 11 in Gestalt eines optischen Zählgerätes angeordnet ist, das für verschiedene Partikelgrößen einstellbar ausgebildet ist. Im Komplettgerät 12 können auch nicht dargestellte Anordnungen zur Datenregistrierung und -verarbeitung untergebracht sein.

Auf der Reinseite zwischen den Regulier-/Absperrventilen 8 und den Anschlußarmaturen 9 kann erforderfichenfalls eine Sterilausführung vorgesehen sein.

Die Testvorrichtung arbeitet wie folgt:

Wenn die Filtrationswirkung des Filters 3 bzw. dessen Leckfreiheit festgestellt werden soll, werden im Filtertestsystem die beiden Regulier-Absperrventile 8 geöffnet, so daß auf der Einspeisseite aus dem Aerosolerzeuger 10 ein feiner Paraffinnebel über die Anschlußarmaturen 9, das Regulier-Absperrventil 8 sowie den Durchflußmesser 7 in das Anschlußverteilerelement 2 einströmen kann. Dies geschieht durch die selbstansaugende Venturidüse und den Luftstrom in der Zuströmleitung 1, so daß der Paraffinnebel mitgerissen wird und schließlich zur Unreinseite des Filters 3 strömt. Das Prüfaerosol hat eine gewünschte Teilchengröße. Die Konzentration wird an die Filterrückhalterate (durch Blindtest ermittelt) angepaßt. Die ausströmende Luft auf der Reinseite des Filters wird durch das optische Partikelzählgerät 11 bei der relevanten Teilchengröße ausgewertet.

Bei einer alternativen Ausführungsvariante wird die Testapparatur umgekehrt wie oben beschrieben betrieben. Dazu wird zunächst die Sterilluft im Sterilluftsystem abgeschaltet. Das hat zur Folge, daß der Filtertest nicht während der laufenden Produktion, jedoch trotzdem ohne Ausbau des Filters durchführbar ist. Bei dieser alternativen Verfahrensweise wird das Prüfaerosol mit Druckluftunterstützung auf der Reinseite des Filters aufgetragen und zwar entgegen der normalen Strömungsrichtung der Sterilluft und danach werden auf der Unreinseite des Filters die Partikel gemessen. Nach dem Filtertest wird die Sterilluft wieder angeschaltet und daß Prüfaerosol wird über das Sterilluftsystem ausgetragen. Das gesamte Sterilluftsystem ist vor der Weiterproduktion kurz zu sterilisieren, da eine sterile Aerosolzugabe kaum möglich ist und bei ausgeschalteter Sterilluft eine Insterilität ins Verteilungssystem eingetragen werden könnte.

## Patentansprüche

1. Anordnung zum Feststellen der Filtrationswirkung von Filtern (3) mit einem in ein Luftsystem integrierbaren Filtertestsystem, das einen über ein Kupplungselement (9) mit einer auf der einen Seite des Filters (3) liegenden Zuströmleitung (1) verbindbaren Aerosolerzeuger (10) und ein mit einer über ein Kupplungselement (9) auf der anderen Seite des Filters (3) liegenden Abströmleitung (5) verbindbares Partikelmeßgerät (11) aufweist, **dadurch gekennzeichnet**, daß das Filtertestsystem zum Einsatz bei einem Sterilluftsystem einer Füll- und Verschließmaschine als Filtertestgerät in Form eines tragbaren, den Aerosolerzeuger (10) und das Partikelmeßgerät (11) aufnehmenden Komplettgeräts (12) und die Kupplungselemente als Anschlußarmaturen (9) ausgebildet sind, über die das Komplettgerät (12) bei Bedarf mit der Zuströmleitung (1) und der Abströmleitung (5) verbindbar ist.

2. Anordnung nach Anspruch 1, **dadurch gekennzeichnet,** daß die Anschlußarmaturen (9) als sterile Steckverbindung ausgebildet sind.

3. Anordnung nach Anspruch 1 oder 2, **dadurch gekennzeichnet,** daß jeder Anschlußarmatur (9) eine Regelungsarmatur (6) mit jeweils einem Durchflußmesser (7) und einem Regulier-Absperrventil (8) zugeordnet ist.

4. Anordnung nach einem der Ansprüche 1 bis 3, **dadurch gekennzeichnet**, daß das Komplettgerät (12) über die auf der Seite des Aerosolerzeugers (10) liegende Anschlußarmatur (9) mit der auf der Reinseite des Filters (3) liegenden Strömungsleitung des Sterilluftsystems und über die auf der Seite des Partikelmeßgerätes (11) liegende Anschlußarmatur (9) mit der auf der Unreinseite des Filters (3) liegenden Strömungsleitung des Sterilluftsystems verbindbar ist.

5. Anordnung nach einem der Ansprüche 1 bis 4, **dadurch gekennzeichnet**, daß der Aerosolerzeuger (10) als Paraffinnebelerzeuger und das Partikelmeßgerät (11) als optisches, für verschiedene Partikelgrößen einstellbares Partikelzählgerät ausgebildet ist.

6. Anordnung nach einem der Ansprüche 1 bis 5, **dadurch gekennzeichnet**, daß das tragbare Komplettgerät (12) mit einer Datenregistrierung/-verarbeitung ausgerüstet ist.

7. Verfahren zum Feststellen der Filtrationswirkung von Filtern zur Filtration von Luft, Gasen oder Flüssigkeiten, mittels einer Anordnung nach Anspruch 1, **dadurch gekennzeichnet**, daß das Komplettgerät (12) derart an das Sterilluftsystem der Füll- und Verschließmaschine angeschlossen wird, daß nach Abschalten der Sterilluft die Reinseite des Filters mit Druckluftunterstützung mit einem Prüfaerosol beaufschlagt und anschließend hinter der Unreinseite des Filters (3) eine Partikelmessung vorgenommen werden kann.

## Claims

1. A device for determining the effectiveness of filters (3) by means of a filter testing system which is integrated in a sterile air processing system, which in turn features an atomiser (10), which can, by means of a coupling unit (9), be attached to a feed line (1) on one side of the filter (3) and also features a particle measuring instrument (11) which can, by means of a coupling unit (9), be attached to a exhaust line (5) on the other side of the filter (3). A particular feature of the filter testing system is that it is used in conjunction with the sterile air system of a filling and sealing machine as a filter testing unit designed to be a complete mobile unit (12) consisting of the atomiser (10), particle measuring instrument (11) and coupling units (9) in the form of connecting fittings, by means of which the complete unit (12) may be attached as required to the feed line (1) and exhaust line (5).

2. A device in accordance with Claim 1, where the connecting fittings (9) are designed as sterile quick-release couplings.

3. A device in accordance with Claim 1 or 2, where a control mechanism (6) consisting of a flow meter (7) and a regulator/stop valve is attached to each connecting fitting (9).

4. A device in accordance with one of the Claims 1 to 3, where the complete unit (12) may be connected by means of the connector fitting (9) on the atomiser (10) side to the feed line of the sterile air processing system on the clean air side of the filter (3) and, on the particle measuring instrument (11) side, by means of the connecting fitting (9), to the exhaust line of the sterile air processing system on the soiled side of the filter (3).

5. A device in accordance with one of the Claims 1 to 4, where the atomiser (10) is in the form of a paraffin atomiser and the particle measuring instrument (11) is an optical particle counting instrument which can be adjusted for various particle sizes.

6. A device in accordance with one of the Claims 1 to 5, where the complete mobile unit (12) is fitted with a data archiving and processing unit.

7. A process for determining the effectiveness of filters used for filtering air, gases or fluids by means of a device in accordance with Claim 1 where the complete unit (12) is connected to the sterile air processing system of the filling and sealing machine in such a way that, after the sterile air supply has been switched off, a test atomiser supported with compressed air may be applied to the clean side of the filter and a subsequent particle measurement may be taken on the soiled side of the filter (3).

## Revendications

1. Dispositif pour la vérification de l'action filtrante de filtres (3) utilisant un système de test de filtre qui peut être intégré dans un circuit d'air et qui comprend un générateur d'aérosol (10) qui peut être raccordé à une conduite d'arrivée (1) se trouvant sur un côté du filtre (3), par l'intermédiaire d'un élément d'accouplement (9) et un appareil de mesures de particules (11) qui peut être relié à une conduite de sortie (5) se trouvant sur l'autre côté du filtre (3), par l'intermédiaire d'un autre élément d'accouplement (9), caractérisé en ce que le système de test de filtre destiné à être utilisé dans un circuit d'air stérile appartenant à une machine de remplissage et de fermeture est constitué par un appareil de test de filtre réalisé sous la forme d'un appareil complet (12) portatif, qui renferme le générateur d'aérosol (10) et l'appareil de mesure de particules (11), et les éléments d'accouplement sont constitués par des dispositifs de raccordement (9) au moyen desquels l'appareil complet (12) peut être relié au besoin à la conduite d'arrivée (1) et à la conduite de sortie (5).

2. Dispositif selon la revendication 1, caractérisé en ce que les appareils de raccordement (9) sont constitués par des raccords stériles du type mâle-femelle.

3. Dispositif selon la revendication 1 ou 2, caractérisé en ce qu'à chaque appareil de raccordement (9) est associé un appareil de réglage (6) possédant un débitmètre (7) et une vanne de réglage-arrêt (8).

4. Dispositif selon une des revendications 1 à 3, caractérisé en ce que l'appareil complet (12) peut être relié à la conduite de circulation du circuit d'air stérile situé sur le côté épuré du filtre (3) par l'intermédiaire de l'appareil de raccordement situé sur le côté du générateur d'aérosol (10), et peut être relié à la conduite de circulation du circuit d'air stérile qui se trouve sur le côté non épuré du filtre (3) par l'intermédiaire d'un dispositif de raccordement (9) situé sur le côté de l'appareil de mesure des particules (11).

5. Dispositif selon une des revendications 1 à 4, caractérisé en ce que le générateur d'aérosol (10) est constitué par un générateur de brouillard de paraffine et l'appareil de mesure des particules (11) est constitué par un appareil de comptage des particules, de nature optique, qui peut être réglé pour différentes dimensions de particules.

6. Dispositif selon une des revendications 1 à 5, caractérisé en ce que l'appareil complet portatif (12) est équipé d'éléments d'enregistrement/traitement des données.

7. Procédé pour déterminer l'action filtrante de filtres destinés à la filtration de l'air, de gaz ou de liquides, au moyen d'un dispositif selon la revendication 1, caractérisé en ce que l'appareil complet (12) est raccordé au circuit d'air stérile de la machine de remplissage et de fermeture, de telle manière que le côté épuré du filtre puisse être chargé par un aérosol d'épreuve, avec assistance d'air comprimé, après l'arrêt de l'air stérile et qu'ensuite, une mesure de particules peut être exécutée en aval du côté non épuré du filtre (3).
